# EUROPÄISCHE PATENTSCHRIFT

(11) **EP 1 662 635 B1**
(45) Veröffentlichungstag und Bekanntmachung des Hinweises auf die Patenterteilung: **24.10.2012**
(21) Anmeldenummer: 05110816.5
(22) Anmeldetag: 16.11.2005
(51) Int. Cl.: H02K 5/22, H02K 11/00, H02K 7/116

(54) **Elektrische Maschine mit in das Gehäuse integrierten Leiterbahnen**
Casing for electric machines with integrated conducting tracks
Boîtier pour machine électrique à pistes conductrices intégrées

(30) Priorität: 29.11.2004 DE 102004057463
(43) Veröffentlichungstag der Anmeldung: 31.05.2006
(73) Patentinhaber: ROBERT BOSCH GMBH, 70442 Stuttgart (DE)
(72) Erfinder: Anding, Lars-Dirk, 72202 Nagold (DE)

(56) Entgegenhaltungen:
- WO-A1-01/61828
- DE-A1- 4 444 923
- DE-A1- 10 318 734
- YEE E: "MOLDED INTERCONNECT DEVICES RESHAPE ELECTROMECHANICAL DESIGN" ELECTRONIC DESIGN, PENTON MEDIA, CLEVELAND, OH, US, Bd. 48, Nr. 18, 5. September 2000 (2000-09-05), XP001143450 ISSN: 0013-4872

## Beschreibung

### Stand der Technik

Die vorliegende Erfindung betrifft eine elektrische Maschine, umfassend ein Polgehäuse zur Aufnahme elektromechanischer Bauteile, ein Getriebegehäuse zur Aufnahme von Getriebebauteilen sowie eine Leiterplatte.

Elektrische Maschinen sind aus dem Stand der Technik in unterschiedlichen Ausgestaltungen bekannt. Elektrische Maschinen werden beispielsweise als Elektromotoren für Hilfsantriebe und/oder Komfortantriebe, beispielsweise in Fahrzeugen, eingesetzt. Da in jüngster Zeit die Anforderungen an derartige Elektromotoren immer höher werden und eine Vielzahl verschiedener Motoren für unterschiedlichste Einsatzzwecke im Fahrzeug verwendet werden, müssen erhöhte Anforderungen hinsichtlich der elektromagnetischen Verträglichkeit gestellt werden. Ferner müssen die Elektromotoren mit Sensorikeinrichtungen ausgestattet werden, um die jeweilige Position des Elektromotors bestimmen zu können. Als Sensorikeinrichtungen werden hierbei häufig Hallsensoren verwendet.

Durch die stetig steigenden Anforderungen werden derartige Elektromotoren jedoch immer komplizierter. Bei einer Verwendung im Fahrzeug müssen die Elektromotoren dabei weiterhin sehr kostengünstig und besonders kompakt aufgebaut sein, wenn sie beispielsweise als Antrieb für ein Schiebedach, zur Sitzverstellung, zur Fensterverstellung oder zur Spiegelverstellung, eingesetzt werden.

Um den Aufwand einer notwendigen Verdrahtung bei einer Vielzahl von elektronischen Bauteilen zu verringern, wurde in der DE 10318 734.0 A1 eine elektrische Maschine mit einer separaten Entstörleiterplatte vorgeschlagen. Hierbei werden verschiedene elektronische Bauteile auf der Entstörleiterplatte angebracht, wobei standardisierte SMD-Bauteile verwendet werden. Eine Verbindung zwischen der Entstörleiterplatte und beispielsweise einem Polgehäuse erfolgt dabei mittels einer Blattfeder. Hierbei ist die elektrische Verbindung jedoch u.a. auch von einer Genauigkeit bei der Montage des Elektromotors abhängig.

WO 01/61828 A1 beschreibt einen Elektromotor mit einem Getriebegehäuse, einem Polgehäuse und einem Bürstenhalter, wobei eine Leiterplatte so angeordnet ist, dass sie mittels einer Klemmelektrode mit dem Gegenkontakt an einem Bürstenhalter in Eingriff steht.

### Vorteile der Erfindung

Eine erfindungsgemäße elektrische Maschine mit den Merkmalen des Patentanspruchs 1 weist demgegenüber die Vorteile auf, dass sie besonders kompakt und kostengünstig herstellbar ist. Hierzu sind erfindungsgemäß in einem Getriebegehäuse der elektrischen Maschine Leiterbahnen integriert, um eine elektrische Verbindung mit einer Leiterplatte der elektrischen Maschine bereitzustellen. Hierbei sind die Leiterbahnen mittels MID-Technik (Molded Interconnect Devices) in das Getriebegehäuse integriert.

Somit weist das Getriebegehäuse erfindungsgemäß eine integrierte Leiterbildstruktur auf. Das Getriebegehäuse wird dabei vorzugsweise spritzgegossen. Die erfindungsgemäße elektrische Maschine weist somit eine reduzierte Teilezahl auf und kann eine Verringerung des Materialeinsatzes sicherstellen. Weiterhin ermöglicht die vorliegende Erfindung eine erhöhte Flexibilität, insbesondere hinsichtlich verschiedener Varianten von Getriebegehäusen bzw. elektrischen Maschinen, insbesondere auch in Kombination mit unterschiedlichen Leiterplatteneinschüben. Mittels der vorliegenden Erfindung kann sehr flexibel auf verschiedene Bestückungsvarianten der Leiterplatte, beispielsweise bezüglich unterschiedlicher Entstörungsanforderungen, reagiert werden. Durch die Integration der Leiterbahn in das Getriebegehäuse kann weiterhin sichergestellt werden, dass jede elektrische Maschine nur mit einer einzigen Leiterplatte ausgerüstet werden muss. Hierdurch lassen sich weiter große Kosteneinsparungspotentiale realisieren.

Dabei stellen die Leiterbahnen eine elektrische Verbindung zwischen der Leiterplatte und einem Steckeranschluss (elektrischer Anschluss) und/oder zu elektronischen bzw. elektrischen Bauteilen der elektrischen Maschine, insbesondere Bürsten o.ä., bereit.

Gemäß der Erfindung werden die Kontaktflächen der Leiterbahnen an einem Boden einer kanalartigen bzw. nutförmigen Ausnehmung angeordnet. Die Wände der kanalartigen Ausnehmung stellen dabei Abstützflächen für die Leiterplatte bereit. Die Leiterplatte kann somit zwischen die Wände der kanalartigen Ausnehmung eingeschoben werden und ist dadurch am Gehäuse fixiert. Somit wird gleichzeitig neben der Montage bzw. Fixierung der Leiterplatte auch ein Kontakt zwischen der Leiterplatte und der Kontaktfläche der Leiterbahn realisiert.

Gemäß der Erfindung weist eine einzelne Leiterbahn eine Vielzahl von Kontaktflächen für einen Kontakt mit der Leiterplatte auf. Dadurch kann beispielsweise ein redundanter Kontakt sichergestellt werden, wodurch die Ausfallwahrscheinlichkeit aufgrund von kontaktbedingten Mängeln reduziert ist oder es kann eine elektrische Verbindung über eine Leiterbahn für unterschiedliche Bauteile auf der Leiterplatte bereitgestellt werden.

Die Unteransprüche zeigen bevorzugte Weiterbildungen der Erfindung.

Gemäß einer bevorzugten Ausgestaltung der Erfindung weist die Leiterplatte Sensorikbauteile, insbesondere Hallsensoren und/oder Entstörbauteile, auf. Dadurch können beispielsweise bei einem Elektromotor mit Sensorik alle notwendigen Bauteile vor einer Montage der Leiterplatte auf der Leiterplatte bestückt und die Leiterplatte anschließend montiert werden. Als Entstörbauteile werden vorzugsweise Kondensatoren oder Varistoren verwendet.
Um eine einfache und sichere Kontaktierung zwischen den Leiterbahnen und der Leiterplatte sicherzustellen, weist die Leiterplatte vorzugsweise Kontaktflächen, insbesondere Kontaktpads, auf, über welche die elektrische Verbindung hergestellt wird. Die Kontaktflächen sind vorzugsweise am Rand der Leiterplatte, insbesondere an wenigstens einer der schmalen Seitenflächen der Leiterplatte angeordnet. Dadurch kann die Leiterplatte als Einschubelement ausgebildet sein. Weiter bevorzugt ist die Kontaktfläche der Leiterplatte an einer Ecke der Leiterplatte angeordnet.

Weiter bevorzugt ist an einem Ende einer Leiterbahn eine Kontaktfläche für einen Kontakt mit der Leiterplatte ausgebildet. Dadurch kann sichergestellt werden, dass die in das Gehäuse integrierten Leiterbahnen eine minimale Länge aufweisen.

Um einen sicheren Kontakt mit der Leiterplatte zu ermöglichen, weisen die Kontaktflächen der Leiterbahn eine Breite auf, welche ungefähr der Breite der Leiterplatte entspricht. Vorzugsweise ist die Breite der Kontaktfläche dabei größer als die Breite der Leiterplatte.

Die erfindungsgemäße elektrische Maschine wird besonders bevorzugt als Elektromotor in einem Fahrzeug verwendet. Hierbei kommt insbesondere ein Einsatz als Komfortantrieb, beispielsweise für elektrisch verstellbare Fenster, Schiebedächer, Sitze, Außenspiegel usw., in Betracht.

### Zeichnung

Nachfolgend wird unter Bezugnahme auf die begleitende Zeichnung ein Ausführungsbeispiel der Erfindung im Detail beschrieben. In der Zeichnung ist:
Figur 1 eine perspektivische Ansicht eines Getriebegehäuses eines Elektromotors gemäß einem Ausführungsbeispiel der vorliegenden Erfindung, und
Figur 2 eine perspektivische Ansicht des in Figur 1 gezeigten Getriebegehäuses mit eingeschobener Leiterplatte.

### Beschreibung des Ausführungsbeispiels

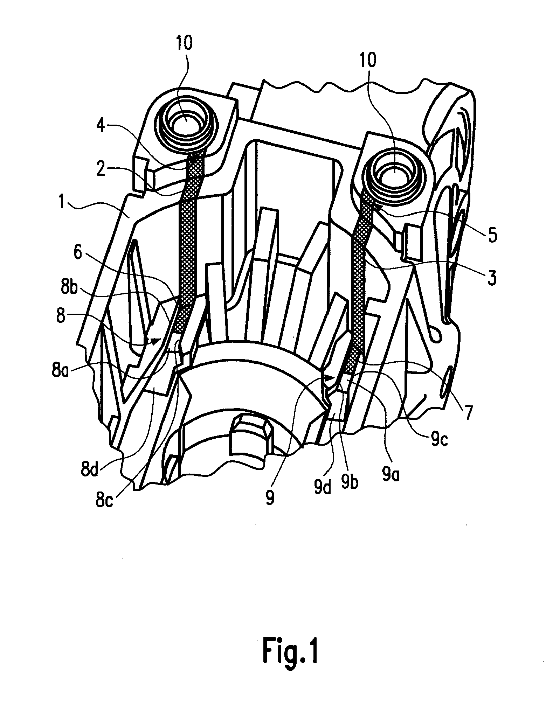

Figur 1 zeigt eine perspektivische Ansicht eines Getriebegehäuses 1 der elektrischen Maschine, welches mit einem nicht gezeigten Polgehäuse verbunden wird. Hierzu sind im Gehäuse 1 zwei Öffnungen 10 zur Befestigung mit dem Polgehäuse vorgesehen. Generell kann zwischen dem Getriebegehäuse 1 und dem Polgehäuse auch noch ein Bürstenhalter zum Halten von Bürsten für die elektrische Maschine angeordnet sein. Die elektrische Maschine dieses Ausführungsbeispiels ist ein Elektromotor, welcher als Kleinmotor in einem Fahrzeug als Fensterhebermotor verwendet wird.

Wie aus Figur 1 ersichtlich ist, sind in das aus Kunststoff gefertigte Getriebegehäuse 1 zwei Leiterbahnen 2, 3 integriert. Die Leiterbahnen 2, 3 wurden in das Kunststoffgehäuse mittels MID-Technik eingebracht. Benachbart zu den Öffnungen 10 zur Befestigung des Polgehäuses ist bei der ersten Leiterbahn 2 im Bereich der Polgehäuseauflage eine Kontaktstelle 4 vorgesehen und bei der zweiten Leiterbahn 3 benachbart zur Öffnung 10 an der Polgehäuseauflage eine Kontaktstelle 5 vorgesehen. An dem zur Kontaktstelle 4 entgegengesetzten Ende der Leiterbahn 2 ist weiterhin eine Kontaktfläche 6 für einen Kontakt mit einer nicht dargestellten Leiterplatte gebildet. Die Kontaktfläche 6 ist, wie in der Figur gezeigt, eine längliche Fläche. In gleicher Weise ist bei der zweiten Leiterbahn 3 an dem zur Kontaktstelle 5 entgegengesetzten Ende der Leiterbahn eine Kontaktfläche 7 zur Leiterplatte gebildet. Die in Figur 1 gezeigte Ausführungsform kann je nach technischen Anforderungen mit einer Leiterplatte an einer der Leiterbahnen 2, 3 oder mit zwei Leiterplatten ausgerüstet werden.

Wie aus Figur 1 ersichtlich ist, sind die Kontaktflächen 6, 7 jeweils in einer nutförmigen Ausnehmung 8 angeordnet. Genauer ist die Kontaktfläche 6 an einem Boden 8a der nutförmigen Ausnehmung 8 angeordnet und die Kontaktfläche 7 ist an einem Boden 9a einer nutförmigen Ausnehmung 9 angeordnet. Die nutförmige Ausnehmung 8 weist senkrecht zum Boden 8a eine erste Seitenwand 8b und eine zweite Seitenwand 8c auf. In entsprechender Weise ist die nutförmige Ausnehmung 9 mit einer ersten Seitenwand 9b und einer zweiten Seitenwand 9c gebildet, welche jeweils senkrecht zum Boden 9a angeordnet sind. Die Seitenwände 8b, 8c bzw. 9b, 9c dienen dabei als Halteelemente für die Leiterplatte, welche in die nutförmige Ausnehmung 8 bzw. 9 eingeschoben werden kann. Um den Einschiebevorgang zu erleichtern, sind an der nutförmigen Ausnehmung 8 bzw. 9 jeweils rampenartige Einführhilfen 8d bzw. 9d gebildet. An einer Leiterplatte 11 ist hierbei eine Kontaktstelle entsprechend der Kontaktfläche 6 bzw. 7 vorgesehen, so dass ein elektrischer Kontakt zwischen den Leiterbahnen 2, 3 und der Leiterplatte möglich ist.

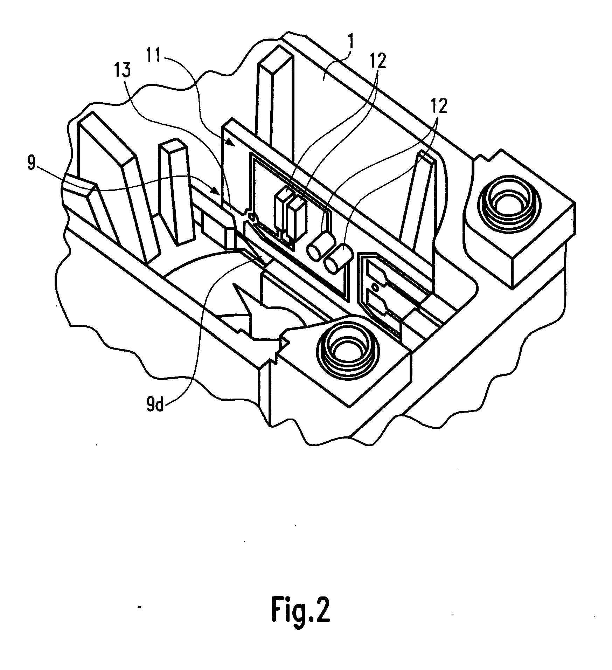

Figur 2 zeigt das erfindungsgemäße Getriebegehäuse 1 mit einer eingeschobenen Leiterplatte 11. Auf der Leiterplatte 11 sind mehrere Entstörbauteile 12 bzw. andere Sensorikbauteile angeordnet. Die Leiterplatte 11 ist in die nutförmige Ausnehmung 8 im Getriebegehäuse eingeschoben. An einer Ecke der Leiterplatte 11 ist ein Kontaktpad 13 angeordnet, welches einen elektrischen Kontakt zwischen einer Kontaktfläche 6 der Leiterbahn 2 und der Leiterplatte 11 herstellt. Der elektrische Kontakt wird dabei über die schmale Seitenfläche der Leiterplatte hergestellt. Es sei angemerkt, dass jedoch der Kontakt ausschließlich oder zusätzlich auch über die Seitenwände 8b, 8c der nutförmigen Ausnehmung 8 hergestellt werden kann, wenn die Leiterbahn auch an den Seitenwänden angeordnet ist.

Beispielsweise ist hierdurch eine elektrische Verbindung zwischen dem Kontaktpad 13 der Leiterplatte 11 und elektrischen Motorstromkontakten und/oder zu Kohlebürsten der elektrischen Maschine hergestellt. Alternativ zur MID-Technologie können diese elektrischen Verbindungen auch teilweise oder vollständig als herkömmliche metallische Stromleiter ausgebildet sein, die seitlich entsprechend den Seitenwänden 8b, 8c - insbesondere federnd - an den Kontaktpads 13 anliegen.

Durch die Verwendung der MID-Technik zur Integration der Leiterbahnen 2, 3 in das Getriebegehäuse 1 kann eine besonders kostengünstige elektrische Verbindung zwischen einer Leiterplatte und anderen elektrischen Bauteilen, wie z.B. Bürsten, einem elektrischen Steckeranschluss, dem Polgehäuse usw., erreicht werden. Durch die Anordnung der Kontaktflächen 6, 7 der Leiterbahnen 2, 3 in den nutförmigen Ausnehmungen 8, 9 kann weiterhin eine sichere und stabile Kontaktierung zwischen den Leiterbahnen und der Leiterplatte erreicht werden.

Im Vergleich mit den bekannten elektrischen Maschinen kann somit erfindungsgemäß die Teileanzahl deutlich reduziert und insbesondere auch die Montage vereinfacht werden, da es nun möglich ist, nur noch eine einzige Leiterplatte für die gesamte elektrische Maschine zu verwenden. Diese Leiterplatte kann vor ihrer Montage mit den notwendigen elektrischen bzw. elektronischen Bauteilen bestückt werden und anschließend auf einfache Weise im Getriebegehäuse montiert werden. Weiterhin kann durch die Verwendung der MID-Technik eine hohe Flexibilität hinsichtlich unterschiedlicher Bestückungsvarianten der Leiterplatte, beispielsweise aufgrund unterschiedlicher Entstörungsanforderungen verschiedener elektrischer Maschinen, reagiert werden.

In dem in den Figuren gezeigten Ausführungsbeispiel stellen die Leiterbahnen 2, 3 eine elektrische Verbindung zwischen einer Sensorikleiterplatte und dem Polgehäuse bereit.

Erfindungsgemäß können somit sowohl Kostenreduzierungen bei der Herstellung der notwendigen Leiterplatten erzielt werden als auch bei der Herstellung der elektrischen Verbindungen von und zu der Leiterplatte.

Im Rahmen der Erfindung sind verschiedene Modifikationen und Änderungen möglich, ohne den Umfang der Erfindung, wie in den beigefügten Ansprüchen definiert, zu verlassen.

## Patentansprüche

1. Elektrische Maschine, umfassend ein Polgehäuse zur Aufnahme elektromechanischer Bauteile, ein Getriebegehäuse (1) zur Aufnahme von Getriebebauteilen
und einer Leiterplatte, **dadurch gekennzeichnet, dass**
das Getriebegehäuse (1) aus einem Kunststoffmaterial hergestellt ist und Leiterbahnen (2, 3) in das Getriebegehäuse (1) integriert sind, um eine elektrische Verbindung mit der Leiterplatte bereitzustellen, wobei die Leiterbahnen (2, 3) mittels MID-Technik in das Getriebegehäuse (1) integriert sind und die Leiterbahnen (2, 3) eine elektrische Verbindung zwischen einer Leiterplatte und einem Steckeranschluss und/oder eine elektrische Verbindung zu elektrischen bzw. elektronischen Bauteilen der elektrischen Maschine, insbesondere dem Polgehäuse und/oder Bürsten, bereitstellen,
eine Kontaktfläche (6, 7) der Leiterbahn (2, 3) an einem Boden (8a, 9a) einer nutförmigen Ausnehmung (8, 9) angeordnet ist, wobei die Seitenwände (8b, 8c; 9b, 9c) der nutförmigen Ausnehmung (8, 9) Abstützflächen für die Leiterplatte zum Abstützen und Halten der Leiterplatte bereitstellen, und dass
eine einzelne Leiterbahn (2, 3) eine Vielzahl von Kontaktflächen zur Bereitstellung einer Vielzahl von Kontakten mit der Leiterplatte aufweist.

2. Elektrische Maschine nach Anspruch 1, **dadurch gekennzeichnet, dass** die Leiterplatte mit Hallsensoren und/oder mit Entstörbauteilen und/oder weiteren Sensorikbauteilen bestückt ist.

3. Elektrische Maschine nach Anspruch 2, **dadurch gekennzeichnet, dass** die Entstörbauteile Kondensatoren oder Varistoren sind.

4. Elektrische Maschine nach einem der vorhergehenden Ansprüche, **dadurch gekennzeichnet, dass** an einem Ende der Leiterbahn (2, 3) eine Kontaktfläche (6, 7) für einen Kontakt mit einer Leiterplatte ausgebildet ist.

5. Elektrische Maschine nach Anspruch 4, **dadurch gekennzeichnet, dass** die Kontaktfläche (6, 7) der Leiterbahn (2, 3) eine Breite aufweist, welche ungefähr der Breite der Leiterplatte entspricht oder eine Breite aufweist, welche größer als die Breite der Leiterbahn ist.

6. Elektrische Maschine nach einem der vorhergehenden Ansprüche, **dadurch gekennzeichnet, dass** an einem Anfang der nutförmigen Ausnehmung (8, 9) eine rampenförmige Einschubhilfe (8d, 9d) angeordnet ist, um ein Einschieben der Leiterplatte in die nutförmige Ausnehmung (8, 9) zu erleichtern.

7. Elektrische Maschine nach einem der vorhergehenden Ansprüche, **dadurch gekennzeichnet, dass** die elektrische Maschine ein Elektromotor, insbesondere ein Komfortantrieb, zur Verwendung in einem Fahrzeug ist.

## Claims

1. Electrical machine comprising a pole housing for accommodating electromechanical components, a gear mechanism housing (1) for accommodating gear mechanism components and a printed circuit board, **characterized in that** the gear mechanism housing (1) is produced from a plastic material and conductor tracks (2, 3) are integrated in the gear mechanism housing (1) in order to provide an electrical connection to the printed circuit board, wherein the conductor tracks (2, 3) are integrated in the gear mechanism housing (1) by means of MID technology and the conductor tracks (2, 3) provide an electrical connection between a printed circuit board and a plug connection and/or an electrical connection to electrical and/or electronic components of the electrical machine, in particular the pole housing and/or brushes, a contact area (6, 7) of the conductor track (2, 3) is arranged on a base (8a, 9a) of a groove-like recess (8, 9), wherein the side walls (8b, 8c; 9b, 9c) of the groove-like recess (8, 9) provide supporting surfaces for the printed circuit board for supporting and holding the printed circuit board, and **in that** a single conductor track (2, 3) has a large number of contact areas for providing a large number of contacts to the printed circuit board.

2. Electrical machine according to Claim 1, **characterized in that** the printed circuit board is equipped with Hall sensors and/or with interference-suppression components and/or further sensor system components.

3. Electrical machine according to Claim 2, **characterized in that** the interference-suppression components are capacitors or varistors.

4. Electrical machine according to one of the preceding claims, **characterized in that** a contact area (6, 7) for contact with a printed circuit board is formed at one end of the conductor track (2, 3).

5. Electrical machine according to Claim 4, **characterized in that** the contact area (6, 7) of the conductor track (2, 3) has a width which corresponds approximately to the width of the printed circuit board or has a width which is greater than the width of the conductor track.

6. Electrical machine according to one of the preceding claims, **characterized in that** a ramp-like insert aid (8d, 9d) is arranged at the start of the groove-like recess (8, 9) in order to facilitate insertion of the printed circuit board into the groove-like recess (8, 9).

7. Electrical machine according to one of the preceding claims, **characterized in that** the electrical machine is an electric motor, in particular a convenience drive, for use in a motor vehicle.

## Revendications

1. Machine électrique, comprenant un bornier conçu pour recevoir des composants électromécaniques, un carter de boîte de vitesses (1) conçu pour recevoir des composants de boîte de vitesses et une plaque conductrice, **caractérisée en ce que** :
le carter de boîte de vitesses (1) est fabriqué en matière plastique et des pistes conductrices (2, 3) sont intégrées dans le carter de boîte de vitesses (1) pour établir une liaison électrique avec la plaque conductrice, les pistes conductrices (2, 3) étant intégrées dans le carter de boîte de vitesses (1) par le biais de la technique MID et les pistes conductrices (2, 3) établissant une liaison électrique entre une plaque conductrice et un raccord enfichable et/ou une liaison électrique avec les composants électriques et/ou électroniques de la machine électrique, notamment le bornier et/ou les brosses ;
une surface de contact (6, 7) de la piste conductrice (2, 3) étant disposée au niveau d'un fond (8a, 9a) d'un évidement (8, 9) en forme de rainure, les parois latérales (8b, 8c ; 9b, 9c) de l'évidement (8, 9) en forme de rainure mettant à disposition des surfaces de soutien pour la plaque conductrice pour soutenir et maintenir la plaque conductrice ; et que
une piste conductrice (2, 3) individuelle comporte une pluralité de surfaces de contact permettant de mettre à disposition une pluralité de contacts avec la plaque conductrice.

2. Machine électrique selon la revendication 1, **caractérisée en ce que** la plaque conductrice est équipée de capteurs à effet de Hall et/ou de composants d'antiparasitage et/ou d'autres composants issus de la technologie des capteurs.

3. Machine électrique selon la revendication 2, **caractérisée en ce que** les composants d'antiparasitage sont des condensateurs ou des varistances.

4. Machine électrique selon l'une quelconque des revendications précédentes, **caractérisée en ce qu'**une surface de contact (6, 7) établissant un contact avec une plaque conductrice est réalisée au niveau d'une extrémité de la piste conductrice (2, 3).

5. Machine électrique selon la revendication 4, **caractérisée en ce que** la surface de contact (6, 7) de la piste conductrice (2, 3) présente une largeur correspondant approximativement à la largeur de la plaque conductrice ou une largeur supérieure à la largeur de la piste conductrice.

6. Machine électrique selon l'une quelconque des revendications précédentes, **caractérisée en ce qu'**un élément auxiliaire d'insertion (8d, 9d) en forme de rampe est disposé au niveau d'un début de l'évidement (8, 9) en forme de rainure afin de simplifier une insertion par coulissement de la plaque conductrice dans l'évidement (8, 9) en forme de rainure.

7. Machine électrique selon l'une quelconque des revendications précédentes, **caractérisée en ce que** la machine électrique est un moteur électrique, notamment un entraînement de confort, utilisé dans un véhicule.
